# EUROPÄISCHE PATENTSCHRIFT

(11) **EP 1 427 606 B1**
(45) Veröffentlichungstag und Bekanntmachung des Hinweises auf die Patenterteilung: **23.03.2005**
(21) Anmeldenummer: 02762250.5
(22) Anmeldetag: 24.08.2002
(51) Int. Cl.: B60R 16/02

(54) **FERNBEDIENBARE ZENTRALE STEUERVORRICHTUNG**
REMOTE-CONTROLLABLE CENTRAL CONTROL DEVICE
DISPOSITIF DE COMMANDE CENTRAL TELECOMMANDABLE

(30) Priorität: 11.09.2001 DE 10144780
(43) Veröffentlichungstag der Anmeldung: 16.06.2004
(73) Patentinhaber: ROBERT BOSCH GMBH, 70442 Stuttgart (DE)
(72) Erfinder: ESCHKE, Bernd, 31162 Bad Salzdetfurth (DE); FISCHER, Joerg, 31139 Hildesheim (DE); MATHONY, Hans-Joerg, 71732 Tamm-Hohenstange (DE); EIMERS-KLOSE, Doerte, 72762 Reutlingen (DE); MAYER, Klaus-Michael, 71254 Ditzingen (DE); HOHEISEL, Dirk, 72770 Reutlingen (DE); KIZLER, Alfred, 70825 Korntal-Muenchingen (DE); LUST, Rainer, 71067 Sindelfingen (DE); EHNISS, Roland, 75378 Bad Liebenzell (DE); FLICK, Bernd, 31199 Diekholzen (DE); EGELHAAF, Jan, 71229 Leonberg (DE); BECKER, Hartmut, 75446 Wiernsheim (DE)
(86) Internationale Anmeldenummer: PCT/DE2002/003118
(87) Internationale Veröffentlichungsnummer: WO 2003/024746

(56) Entgegenhaltungen:
- EP-A- 0 419 897
- GB-A- 2 351 588
- US-A1- 2001 001 319
- US-B1- 6 275 231

## Beschreibung

### Stand der Technik

Die Erfindung geht aus von einer Steuervorrichtung nach der Gattung des Hauptanspruchs. Es sind schon Kraftfahrzeuge bekannt, bei denen Steuergeräte für Fahrzeugfunktionen sowie für Multimediaanwendungen im Auto, wie z.B. Autoradio, TV oder Navigationsanwendungen, über verschiedene Bussysteme vernetzt sind wie z.B. GB 2 351 588 A. Externe Geräte wie ein Mobiltelefon oder ein tragbarer Taschencomputer, z.B. ein sogenannter PDA (Personal digital assistent) sind an das vorhandene Fahrerinformationssystem angebunden. Dabei besteht keine Verknüpfung der Fahrzeugelektronik, also der Elektronik, die die Fahreigenschaften, die Fahrzustände und die Steuerung des Fahrzeugs umfasst, und der externen Geräte. Damit ist auch keine sichere externe Steuerung und/oder Abfrage der Fahrzeugelektronik möglich. Zudem sind einmal in das Fahrzeug eingebaute Systeme nicht oder nur sehr aufwendig erweiterungsfähig, da sie keine externen Schnittstellen aufweisen. Die Fahrzeugelektronik, die insbesondere für die Sicherheit des Fahrers relevant ist, insbesondere das Anzeigegerät, kann nicht auf externe Ressourcen zurückgreifen.

### Vorteile der Erfindung

Die erfindungsgemäße Steuervorrichtung mit den Merkmalen des Hauptanspruchs hat demgegenüber den Vorteil, dass über die Luftschnittstelle Fahrzeugfunktionseinrichtungen und/oder die Ausgabegeräte im Fahrzeug über die Eingabevorrichtung steuerbar sind. Dies ermöglicht einerseits, durch Zugriff auf die Fahrzeugfunktionseinrichtungen, z.B. auf Regelkreise für die Motorsteuerung, die Kraftstoffzufuhr, das Bremssystem oder das Kühlsystem, eine Ferndiagnose und eine Fernwartung dieser Systeme durchzuführen. Hierdurch kann das Fahrzeug ohne ein Eingreifen des Benutzers durch den Hersteller oder eine damit beauftragte Einrichtung überprüft, gewartet und gegebenenfalls in eine Werkstatt beordert werden. Ferner kann auch eine Klimaregelung über die Eingabevorrichtung gesteuert werden, so dass eine gewünschte Temperatur vor der Fahrt bereits eingestellt wird, so dass bei einem Betreten des Fahrzeugs der Fahrzeuginnenraum die gewünschte Temperatur aufweist. Ferner können auch Ausgabegeräte im Fahrzeug über die Eingabevorrichtung gesteuert werden. Ausgabegeräte sind z.B. eine Radiovorrichtung, eine Fahrzeugnavigation oder ein Internetzugang. Z.B. kann ein Fahrziel, zu dem die Navigationsvorrichtung eine Fahrtroute berechnen soll, von der Eingabevorrichtung über die Luftschnittstelle an die Navigationsvorrichtung übermittelt werden.

Durch die in den Unteransprüchen aufgeführten Maßnahmen sind vorteilhafte Weiterbildungen und Verbesserungen der im Hauptanspruch angegebenen Steuervorrichtung möglich. Besonders vorteilhaft ist, die Steuervorrichtung mit einer Vielzahl von Fahrzeugbussystemen zu verbinden. Derartige Bussysteme sind im allgemeinen hinsichtlich ihres Datendurchsatzes und ihrer Transportsicherheit an den jeweiligen Verwendungszweck angepasst, so dass von der Eingabevorrichtung eine geeignete Verbindung mittels der Steuervorrichtung und dem daran angeschlossenen Bussystem realisierbar ist. Die Steuervorrichtung ermöglicht dabei auch einen Datenaustausch der Bussysteme untereinander.

Weiterhin ist vorteilhaft, der Steuervorrichtung übermittelte Anweisungen hinsichtlich einer Identifikation des Eingabegeräts zu überprüfen und einen Zugriff auf Fahrzeugsysteme in Abhängigkeit von dem Fahrzeugsystem nur bei einer eindeutigen Identifikation und Berechtigung zuzulassen. Wird z.B. über die Luftschnittstelle ein Telefonanruf von einer Sendeeinheit eines Mobilfunkbetreibers aufgefangen, so wird der Anruf an geeignete Ausgabeeinrichtungen im Fahrzeug weitergeleitet, so dass für den Fahrer eine Telefonverbindung erstellbar ist. Weitere Fahrzeugsysteme bleiben für einen beliebigen Anrufer jedoch gesperrt. Wenn sich hingegen der Fahrzeughersteller identifiziert, so können dem Fahrzeughersteller bestimmte Fahrzeugdaten zur Verfügung gestellt werden, so dass Fahrzeugsysteme überprüft und der Fahrzeugbenutzer auf eine gegebenenfalls erforderliche Wartung hingewiesen werden kann. Vorzugsweise sind die Zugriffsrechte auch von dem Fahrzeugzustand abhängig. So kann z.B. vorgesehen sein, dass auf sicherheitsrelevante Systeme nur bei abgeschaltetem Motor im Stand zugegriffen werden kann, damit die Fahrsicherheit nicht gefährdet wird. Bei einem derartigen Zugriff ist auch ein aktives Ausführen von Prüffunktionen, z.B. ein Bremsentest, möglich. Die Identifikation eines Benutzers erfolgt dabei vorteilhaft durch einen nicht flüchtigen Speicher, indem für jedes Bussystem und/oder für jede Bussystemfunktion festgelegt ist, auf welches Bussystem bzw. auf welche Funktionen eine externe Eingabevorrichtung abhängig von ihrer Identifikation zugreifen kann.

Weiterhin ist vorteilhaft, die Luftschnittstelle in einer ersten Anzeigeeinrichtung in einem Kraftfahrzeug anzuordnen. Vorteilhaft kann hierbei die Steuervorrichtung auch in die erste Anzeigevorrichtung integriert werden, so dass elektrische Komponenten möglichst zusammengefasst in einem Gehäuse in das Fahrzeug einbaubar sind.

Weiterhin ist vorteilhaft, eine erste und eine zweite Steuervorrichtung vorzusehen, wobei die erste Steuervorrichtung den Ausgabegeräten und die zweite Steuervorrichtung den Fahrzeugfunktionen zugeordnet ist. Während die erste Steuervorrichtung durch eine erste Firewall geschützt ist, wird die zweite Steuervorrichtung zusätzlich durch eine zweite Firewall geschützt, so dass ein Eingabegerät, das eine Zugriffserlaubnis auf die erste Steuervorrichtung erhält, z.B. von einem Diensteanbieter für eine außerhalb des Fahrzeugs in einer Zentrale durchgeführte Fahrzeugnavigation, trotzdem der Zugang zu der zweiten Steuervorrichtung verwehrt wird. Dennoch steht der Weg offen, damit eine Fahrzeugwerkstatt und/oder eine Fahrzeughersteller auch auf sicherheitsrelevante Fahrzeugsysteme über die Luftschnittstelle zugreifen kann, wenn eine erfolgreiche Identifikation an der zweiten Firewall erfolgt. Die erste und die zweite Firewall sind dabei ein Manipulationsschutz, der bei jedem Zugriff auf die dahinter angeordneten Elemente überprüft, ob der jeweils Zugreifende für den Zugriff berechtigt ist.

Weiterhin ist vorteilhaft, an die erste Steuervorrichtung und an die zweite Steuervorrichtung jeweils eine eigene Anzeige anzuschließen. Hierdurch kann die Anzeige von den Daten der Ausgabegeräte von einer Anzeige der für die Fahrt unmittelbar wichtigen Daten, wie z.B. der Fahrzeuggeschwindigkeit oder dem Ausfall wichtiger Fahrzeugsysteme, getrennt werden.

Weiterhin ist vorteilhaft, in einem Einbaubereich, der vorzugsweise einen genormten Einbauschacht aufweist, Geräte anzubringen, die an die Steuervorrichtung über einen Datenbus anschließbar sind. Hierdurch kann die Steuervorrichtung beliebig erweitert werden. Vorzugsweise können anderweitig an die Steuervorrichtung angeschlossene Bedienelemente auch zur Bedienung der in den Einbaubereich eingebrachten weiteren Geräte benutzt werden.

Besonders vorteilhaft ist dabei, die weiteren Geräte und/oder Module in Form von Steckkarten auszuführen, die in eine dafür geeignete Box eingeschoben werden. Eine Box für die Anbringung von Steckkarten ist dabei an einer geeigneten, vorzugsweise gut zugänglichen, jedoch nicht störenden Stelle im Fahrzeug anzuordnen, wobei Gehäuse für einzelne Einbaugeräte eingespart werden können. Zugleich können eine Anzeige und eine Bedienung anderer Geräte für die nachgerüsteten Geräte mitgenutzt werden. Ein Austausch von Steckkarten ist einfach möglich und erlaubt damit eine einfache Ergänzung zusätzlicher Geräte und ein problemloses Austauschen vorhandener Geräte.

Eine besonders einfache Bedienung wird dadurch erreicht, dass Bedienelemente zu über die Steuervorrichtung ansteuerbaren Geräten und Funktionen an einem Lenkrad in dem Fahrzeug angeordnet sind, so dass sie für den Fahrer leicht erreichbar sind.

Weiterhin ist vorteilhaft, dass über die Luftschnittstelle auch Fahrzeugdaten abrufbar sind, die eine externe Fahrzeugdiagnose erlauben, z.B. auch durch eine Servicezentrale bei einem Fahrzeugdefekt.

Weiterhin ist vorteilhaft, dass die Eingabevorrichtung auch weitere Funktionen aufweist, z.B. eine Internet- oder eine Telefonfunktion sowie eine Terminverwaltung, die über mit der Steuervorrichtung verbundene Bedieneinrichtungen gesteuert werden können, so dass auf eine Eingabe mit unpraktischen oder kleinen Bedienelementen direkt an der Eingabeeinrichtung verzichtet werden kann. Bevorzugt ist auch eine Spracheingabe zur Erfassung von Text oder zur Eingabe von Anweisungen möglich.

### Zeichnung

Ausführungsbeispiele der Erfindung sind in der Zeichnung dargestellt und in der nachfolgenden Beschreibung näher erläutert. Es zeigen Figur 1 ein erstes Ausführungsbeispiel für eine erfindungsgemäße Steuervorrichtung in Verbindung mit Fahrzeugsystemen in einem Kraftfahrzeug, Figur 2 und Figur 3 zeigen weitere, erfindungsgemäße Einsatzmöglichkeiten für eine erfindungsgemäße Steuervorrichtung zusammen mit Fahrzeugsystemen.

### Beschreibung des Ausführungsbeispiels

Die erfindungsgemäße Steuervorrichtung kann in beliebigen Fahrzeugen verwendet werden. Insbesondere ist ihre Verwendung in Kraftfahrzeugen vorteilhaft, in denen eine Vielzahl elektrischer und mechanischer Systeme gesteuert und gewartet werden müssen. Durch eine Verknüpfung verschiedener Einzelsysteme können dabei Synergieeffekte zwischen den einzelnen Systemen genutzt werden. Z.B. können Daten eines Wegstreckensensors, der für die Bestimmung der Fahrzeuggeschwindigkeit ausgewertet wird, auch für die Fahrzeugnavigation zur Verfügung stehen. Mit einer zentralen Steuervorrichtung, an die alle Systeme angeschlossen sind, können dabei zusätzliche Verbindungen zwischen einzelnen Systemen im Fahrzeug vermieden werden. Hierdurch wird auch eine gute Erweiterbarkeit geschaffen, da zusätzliche, in das Fahrzeug zu integrierende Systeme, an die Steuervorrichtung angeschlossen werden können und sofort mit allen anderen Systemen vernetzt sind. Durch eine Zugriffskontrolle, mit der eine Berechtigung des Eingabegeräts auf verschieden Fahrzeugsysteme überprüft wird, wird zudem eine hohe Sicherheit erreicht.

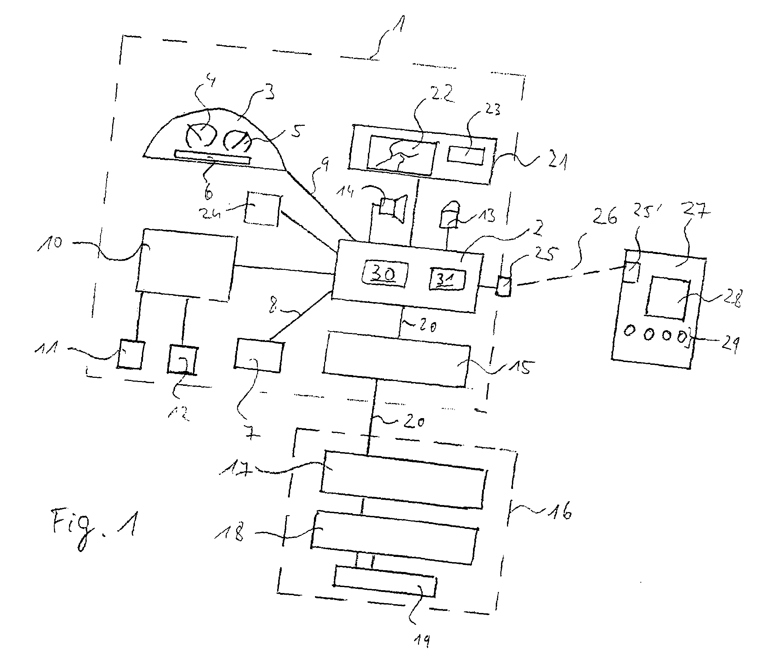

In der Figur 1 ist ein erstes Ausführungsbeispiel für eine Steuervorrichtung und der damit verbundenen Fahrzeugelektronik in einem Kraftfahrzeug dargestellt. In einem Hauptbereich 1 der Fahrzeugelektronik, der in der Figur 1 gestrichelt abgegrenzt ist, ist eine Steuervorrichtung 2 angeordnet, die als Hauptbestandteil der Fahrzeugelektronik zum Vernetzen von Daten von fahrzeugspezifischen Systemen und von optionalen Ausgabegeräten, also z.B. von Multimedia- und Telematikgeräten dient. Die Steuervorrichtung steuert und priorisiert bei von verschiedenen Geräten zeitnah ausgegebenen Daten den Datenfluss zwischen den einzelnen, an sie angeschlossenen Komponenten. Die Schnittstellen der Steuervorrichtung sind standardisiert, wobei die Kommunikation mit den angeschlossenen Komponenten über jeweils geeignete Bussysteme erfolgt. An die Steuervorrichtung 2 ist ein erstes Anzeigeinstrument 3 zur Darstellung fahrzeugspezifischer Größen angeschlossen. Die fahrzeugspezifischen Größen werden z.B. in einer ersten Skalenanzeige 4, in einer zweiten Skalenanzeige 5 und/oder in einer weiteren Anzeige 6 dargestellt, wobei die weitere Anzeige 6 insbesondere zur Darstellung von Warnfeldern oder von Fehlermeldungen dient. Die erste Anzeigeeinrichtung 3 ist vor einem Fahrer an der Instrumententafel des Kraftfahrzeugs angeordnet. Die Steuervorrichtung 2 ist vorzugsweise hinter einer Abdeckung der Instrumententafel an einer für die Passagiere des Fahrzeugs nicht direkt zugänglichen Stelle angeordnet. Die Fahrzeugdaten, die in dem ersten Anzeigeinstrument 3 dargestellt werden, werden von Fahrzeugsensoren 7 über eine CAN-Busverbindung 8 an die Steuervorrichtung 2 weitergeleitet und von dieser über eine weitere CAN-Busverbindung 9 an das erste Anzeigeinstrument 3 übertragen (CAN = Controller Area Network). Anstelle einer CAN-Busverbindung sind auch andere, geeignete Busverbindungen möglich. In einem weiteren Ausführungsbeispiel kann an das erste Anzeigeinstrument 3 Sensoren auch direkt über die CAN-Busverbindung 9 verbunden sein. Ferner ist die Steuervorrichtung 2 mit einer zentralen Signal- und Leistungsverteilungseinheit 10 verbunden, an die Aktoren 11 im Fahrzeug und eine Bedieneinheit 12 angeschlossen ist, deren Bedienelemente sich an einem Fahrerplatz befinden. Die Bedienelemente sind vorzugsweise an der Lenksäule oder an dem Lenkrad des Fahrzeugs angeordnet. Ferner sind an die Steuervorrichtung 2 ein Mikrofon 13 und ein Lautsprecher 14 angeschlossen. Über das Mikrofon 13 wird eine Sprachsteuerung der an die Steuervorrichtung 2 angeschlossenen Systeme ermöglicht. Rückmeldungen über die durchgeführten Eingaben und Warninformationen können über den Lautsprecher 14 ausgegeben werden. Ferner können der Lautsprecher 14 und das Mikrofon 13 auch als Teile einer Telefonvorrichtung verwendet werden, wobei über die Luftschnittstelle 25 eine Telefonverbindung erstellt wird. Sollte ein Notfall auftreten, kann von einem Fahrer oder automatisch ein Notfallsignal ausgelöst werden, dass über die Luftschnittstelle an eine Leitzentrale übermittelt wird. Über die Navigationsfunktion einer an die Steuervorrichtung angeschlossenen Navigationsvorrichtung kann hierbei die aktuelle Fahrzeugposition mit übertragen werden.

Ferner ist an die Steuervorrichtung 2 eine Mittelkonsolenbedienung 15 angeschlossen, mit dem in einer zweiten Elektronikeinheit 16 angeordnete Geräte bedienbar sind. Die zweite Elektronikeinheit 16 ist vorzugsweise in der Mittelkonsole des Fahrzeugs angeordnet, und bietet normierte Einbauschächte insbesondere für Ausgabegeräte. Im vorliegenden Ausführungsbeispiel ist in der zweiten Elektronikeinheit 16 eine Radioempfangs- und Musikwiedergabevorrichtung 17, eine Navigationsvorrichtung 18 und ein Laufwerk 19 angeordnet. Die zweite Elektronikeinheit 16 ist vorzugsweise über einen optischen Datenbus 20 mit dem Hauptbereich 1 und damit mit der Steuervorrichtung 2 verbunden. Ferner ist die Steuervorrichtung 2 mit einer zweiten Anzeigeeinrichtung 21 verbunden, in der unter anderem eine Landkartendarstellung 22 einer Fahrzeugnavigation und Textinformationen 23, z.B. über einen eingestellten Radiosender der Radioempfangs- und Musikwiedergabevorrichtung 17, darstellbar sind. Das Laufwerk 19 ist vorzugsweise als ein CD-Laufwerk ausgeführt, kann jedoch auch für beliebige Speicherkarten oder für Magnetbänder sowie für andere magnetische und/oder optische Datenträger verwendet werden. Ferner ist mit der Steuervorrichtung 2 eine Zugangskontrolle 24 verbunden, mit der ein Zugang auf das Fahrzeug kontrolliert werden kann, also eine Schließanlage im Fahrzeug, eine Alarmanlage und/oder eine Wegfahrsperre.

An die Steuervorrichtung 2 ist eine Luftschnittstelle 25 angeschlossen, über die eine Funkverbindung 26 zu einem externen Eingabegerät 27 erstellt werden kann. In einem weiteren Ausführungsbeispiel ist auch eine optische Verbindung z.B. mittels Infrarot- oder Laserlicht anstelle der Funkverbindung 26 möglich. Das Eingabegerät 27 weist vorzugsweise eine Anzeige 28 und Bedienelemente 29 auf. Das Eingabegerät 27 ist in einem ersten 7Ausführungsbeispiel als ein tragbarer Computer, z.B. ein Notebook oder ein PDA (Personal Digital Assistent), oder als ein Mobiltelefon ausgeführt. In einem weiteren Ausführungsbeispiel kann die Eingabevorrichtung auch eine externe Computervorrichtung sein, die über eine Mobilfunkverbindung mit der Luftschnittstelle 25 und damit mit der Steuervorrichtung 2 in Verbindung tritt. Ein Benutzer kann nun über die Bedienelemente 29 einen Befehl, der vorzugsweise in der Anzeige 28 dargestellt wird, von dem Eingabegerät 27 über die Funkverbindung 26 und die Luftschnittstelle 25 zu der Steuervorrichtung 2 übermitteln. An dem Eingabegerät 27 ist ein Gegenstück 25' zu der an den Hauptbereich 1 der Fahrzeugelektronik angeordneten und mit der Steuervorrichtung 2 verbundenen Luftschnittstelle vorgesehen. Die Steuervorrichtung 2 weist eine Recheneinheit 31 auf, die den übermittelten Befehl erfasst und die ferner eine Identifikation von dem Eingabegerät 27 anfordert oder eine mit dem Befehl zusammen übermittelte Identifikation überprüft. Hierzu weist die Steuervorrichtung 2 einen nichtflüchtigen Speicher 30 auf, in dem für bestimmte Identifikationen jeweils zugeordnete Berechtigungen für einen Zugriff auf Fahrzeugfunktionen abgelegt sind. Insbesondere ist in dem nichtflüchtigen Speicher 30 abgelegt, auf welche an die Steuervorrichtung 2 angeschlossenen Einrichtungen ein Benutzer von dem Eingabegerät 27 aus zugreifen kann. Insbesondere wird der Zugang auf einzelne Bussysteme geregelt. Für eine bestimmte Identifikation kann z.B. ein Zugriff auf eine Navigationsvorrichtung 18 möglich sein, mit der die aktuelle Fahrzeugposition abgerufen und dem Eingabegerät 27 zurückübermittelt wird. Dies ist insbesondere für eine Spedition oder für ein Taxiunternehmen von Interesse, da hierdurch die aktuelle Fahrzeugposition verfügbar ist, um eine optimale Routenaufteilung für eine Fahrzeugflotte planen zu können, wobei auch Daten über einen Fahrzeugzustand übermittelt werden können.

Ferner ist eine Kontrolle von Fahrzeugfunktionen möglich, insbesondere von Aktoren 11. Hierdurch können von einer hierzu autorisierten Werkstatt gezielt Fahrzeugfunktionen, z.B. Ölstand, Bremsflüssigkeitsstand oder Kühlwasserstand bzw. eine Funktionsfähigkeit von Fahrzeugmodulen wie z.B. dem Bremsensystem überprüft werden. Hierdurch ist es möglich, bei einem in Folge eines Defekts liegengebliebenen Fahrzeug schnellstmöglich Reparaturhinweise an den Fahrer bzw. einen Techniker geben zu können oder eine Reparatur in der Werkstatt selbst vorbereiten zu können. Ferner können auch regelmäßige Überprüfungen oder Softwareupdates von in Steuergeräten des Fahrzeugs abgelegten Programmen von dem Fahrzeughersteller bzw. von einem hierzu autorisierten Dienstleister vorgenommen werden. In einem bevorzugten Ausführungsbeispiel kann auf bestimmte Aktorensysteme von der Steuervorrichtung 2 nur dann durch das Eingabegerät 27 zugegriffen werden, wenn das Fahrzeug steht bzw. der Motor abgeschaltet ist. Hierdurch wird ein während einer Fahrt möglicherweise gefährlicher Eingriff in sicherheitsrelevante Systeme ausgeschlossen. Vorteilhaft wird dabei durch die Steuervorrichtung 2 auch die Priorität von eingegebenen Befehlen berücksichtigt, so dass z.B. über die Mittelkonsolenbedienung 15 von einem Fahrer eingegebenen Befehle, denen der über das Eingabegerät 27 eingegebenen Befehle vorgezogen werden. Generell wird der Verarbeitung von Anfragen von sicherheitsrelevanten Fahrzeugsystemen, z.B. dem Bremssystem, stets Priorität gegenüber anderen Aufgaben der Steuervorrichtung eingeräumt. Notfalls wird eine gerade bearbeitete Anfrage abgebrochen, um der Anforderung des sicherheitsrelevanten Systems gerecht zu werden. Eine diesbezügliche Prioritätenregelung ist vorzugsweise in dem nichtflüchtigen Speicher 30 der Steuervorrichtung 2 abgelegt.

Die Steuervorrichtung kann an einer Vielzahl von Fahrzeugen verwendet werden, wenn eine Anpassung an die jeweiligen Fahrzeugfunktionen erfolgt. Über die Mittelkonsolenbedienung 15 ist dabei auch möglich, auf das Eingabegerät 27 zuzugreifen und entweder Antworten an das Eingabegerät 27 zu senden oder auch Steuerungen des Eingabegeräts 27 vorzunehmen. In einem ersten Ausführungsbeispiel wird das Eingabegerät 27 in der Nähe des Fahrzeugs verwendet, so z.B. von einer Werkstatt, um eine Datenkommunikation mit dem Fahrzeug vorzunehmen. Ferner kann jedoch auch über eine Mobilfunkverbindung eine Kommunikation aus beliebiger Entfernung erfolgen. Das Anbringen einer zusätzlichen Telefonverbindung im Fahrzeug kann dadurch vermieden werden. Zugleich kann die Telefonverbindung auch für die Verbindung zu dem Eingabegerät 27 verwendet werden.

In einem weiteren Ausführungsbeispiel kann die Steuervorrichtung für die Steuerung einer in der Figur 1 nicht dargestellten Klimaanlage verwendet werden. Hierbei kann durch das Eingabegerät eine Fahrzeugtemperatur vorgewählt werden, so dass vor dem Einsteigen durch die Klimavorrichtung diese Fahrzeugtemperatur bereits entweder durch Heizen oder durch Kühlen eingestellt wird. Zudem kann über die Eingabevorrichtung auch die Fahrzeugbeleuchtung geschaltet werden, so dass ein Fahrer auf einem großen, unbeleuchteten Parkplatz durch das Auslösen der Fahrzeugbeleuchtung sein Fahrzeug leicht auffinden kann. Durch die Überwachung der Fahrzeugfunktionen mit einem eigenen Eingabegerät kann sich der Fahrer stets selbst von der Funktionsfähigkeit seines Fahrzeugs überzeugen. Durch die Verbindung zu dem Eingabegerät 27, das auch ein Computer des Benutzers sein kann, ist eine Fahrzeugnavigation, also die Steuerung des Fahrzeugs in einem Straßennetz, mittels des Computers des Benutzers möglich, auf dem eine Fahrtroute entworfen und dann an das Fahrzeug übermittelt wird. Z.B. können auch Navigationsinformationsdienste auf die Navigationsvorrichtung zugreifen und aktuelle Verkehrsdaten an diese übermitteln. Andere Funktionsbereiche bleiben für den Anbieter der Navigationsinformationen gesperrt.

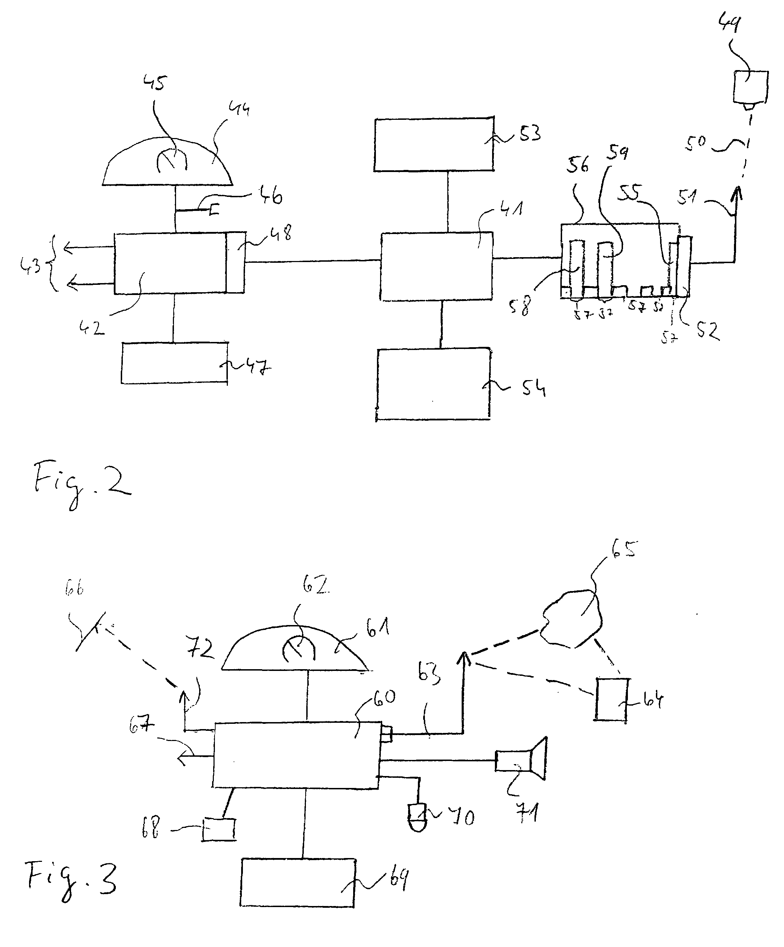

In der Figur 2 ist ein weiteres Ausführungsbeispiel für eine Steuervorrichtung mit einer damit verbunden Fahrzeugelektronik dargestellt. Hierbei ist eine erste Steuervorrichtung 41 für die Ansteuerung von Ausgabegeräten und einer Bedienschnittstelle vorgesehen. Vorzugsweise sind mit der ersten Steuervorrichtung 41 nur solche Systeme verbunden, die für die Fahrsicherheit nicht relevant sind. Ferner ist eine zweite Steuervorrichtung 42 vorgesehen, die über Bussysteme 43, vorzugsweise CAN-Bussysteme, mit Fahrzeugsensoren und Aktoren im Fahrzeug verbunden ist, z.B. mit dem Bremssystem oder der Motorsteuerung. Ferner ist an die zweite Steuervorrichtung 42 ein eine zweite Anzeigeeinrichtung 44 mit Darstellungen 45 zur Darstellung von Fahrzeuggrößen durch vorzugsweise mindestens ein Zeigerinstrument angeschlossen. An die Busverbindung zu der zweiten Anzeigeeinrichtung 44 ist vorzugsweise ein Diagnoseanschluss 46 angeordnet, mit dem direkt durch den Anschluss eines externen Geräts auf die Funktionen der Bussysteme und der zweiten Steuervorrichtung 42 zugegriffen werden kann. Eine Steuerung der Fahrzeugfunktionen erfolgt durch Bedienelemente 47, die mit der zweiten Steuervorrichtung 42 verbunden sind. Die Bedienelemente 47 befinden sich vorzugsweise an einem Lenkrad, an einer Lenksäule oder im Fußbereich vor einem Fahrer des Fahrzeugs. Die zweite Steuervorrichtung 42 ist gegenüber der ersten Steuervorrichtung 41 durch eine zweite Firewall 48 geschützt. Die zweite Firewall 48 dient als Manipulationsschutz und erlaubt einen Zugriff von der ersten Steuervorrichtung 41 auf die zweite Steuervorrichtung nur für solche Anweisungen, die von einer Stelle ausgegeben werden, die hierzu berechtigt ist, wobei die Berechtigung abhängig von dem Fahrzeugzustand ist. Hierdurch kann einerseits von der ersten Steuervorrichtung 41 und andererseits auch über ein externes Eingabegerät 49, über eine Funkverbindung 50 und eine an die erste Steuervorrichtung 41 angeschlossene Luftschnittstelle 51 auf die zweite Steuervorrichtung 42 zugegriffen werden. Zwischen der Luftschnittstelle 51 und der ersten Steuervorrichtung 41 ist vorzugsweise eine erste Firewall 52 angeordnet, die bereits einen Zugriff von dem Eingabegerät 49 auf die erste Steuervorrichtung 41 überprüft und einen Zugriff bei einer negativ ausgefallenen Autorisierung verweigert. An die erste Steuervorrichtung ist vorzugsweise eine weitere Anzeige 53 angeschlossen, die vorzugsweise in der Mittelkonsole des Fahrzeugs angeordnet ist. Ferner sind weitere Bedienelemente 54 angeordnet, die sich ebenfalls vorzugsweise in der Mittelkonsole befinden. Eine Ansteuerung der ersten Luftschnittstelle 51 ist vorzugsweise auf einer Steckkarte 55 angeordnet, die in ein Steckkartengehäuse 56 eingebracht ist. Das Steckkartengehäuse 56 weist Steckkartenplätze 57 auf, in die elektrische Schaltungen, die auf einer Leiterplatte angeordnet sind, in eine dafür vorgesehene Steckverbindung eingebracht werden können. Hierdurch können zusätzliche Geräte an die erste Steuervorrichtung 41 angeschlossen werden. In dem vorliegenden Ausführungsbeispiel ist eine Radiovorrichtung 58 und eine Navigationsvorrichtung 59, die jeweils auf einer eigenen Steckkarte angeordnet sind, in dafür vorgesehene Anschlüsse der Steckkartenplätze 57 eingesteckt. Hierdurch können an eine erste Steuervorrichtung 41 angeschlossene Module bequem ausgetauscht oder ergänzt werden. Solche Module sind z.B. ein Fernsehempfänger, ein Satellitenempfänger, ein Radioverstärker, eine weitere Luftschnittstelle, eine Schnittstelle zu einer Kamera oder ein entsprechendes Laufwerk. Eine Datenverbindung zwischen dem Steckkartengehäuse 56 und der ersten Steuervorrichtung 41 ist vorzugsweise als ein sogenannter Firewire-Bus (IEEE 1394B) ausgeführt. Die Module werden in einem bevorzugten Ausführungsbeispiel nach dem Einstecken durch die erste Steuervorrichtung 41 automatisch erkannt, so dass auf eine Initialisierung durch einen Benutzer nicht erforderlich ist. Ebenso wie bei dem Ausführungsbeispiel gemäß der Figur 1 ist ein externer Zugriff von dem Eingabegerät 49 auf die Fahrzeugelektronik möglich.

Über die Luftschnittstelle 51 ist es zudem möglich, bei dem Diebstahl eines Fahrzeugs unmittelbar auf Fahrzeugfunktionen einwirken zu können. Unter anderem kann eine elektrische Wegfahrsperre ausgelöst und die aktuelle Fahrzeugposition abgerufen werden.

Als Übertragungsmoden für eine Mobilfunkübertragung sind z.B. GSM, GPRS oder UTMS möglich. Eine Verbindung zu einem externen Serviceanbieter oder zu einer Notrufleitstelle sowie zu einem Fahrzeughersteller oder eine Reparaturwerkstatt kann auch in der Weise erfolgen, dass über die Luftschnittstelle, z.B. über eine sogenannte Bluetooth-Schnittstelle, zunächst eine drahtlose Verbindung zu einem Eingabegerät erstellt wird. Das Eingabegerät weist wiederum ein Mobilfunkmodul auf, mit dem eine Verbindung zu einem Gegengerät außerhalb des Fahrzeugs über eine Mobilfunkverbindung geschaffen werden kann. In einem weiteren Ausführungsbeispiel kann in eine Steckkartenverbindung ein weiteres Mobilfunkmodul eingesteckt sein. Damit kann von dem Eingabegerät über die Schnittstelle, die eine drahtlose Verbindung z.B. über eine Bluetooth-Schnittstelle ermöglicht, eine Verbindung zu dem Mobilfunkmodul und von diesem zu einem Diensteanbieter über ein Datennetz geschaffen werden. Diese Möglichkeiten ergeben sich in entsprechender Weise für die Ausführungsbeispiele gemäß der Figuren 1 und 3.

In die Steckkartenanschlüsse können auch Komponenten für weitere Ausgabegeräte im Fahrzeug eingesteckt werden, so z.B. für in einer Rücklehne des Fahrzeugs angeordnete Bildschirme. Ferner ist auch möglich, eine Steckkarte zur Steuerung einer über die Bedienelementen 54 in der Anzeige 53 dargestellten Bedienoberfläche vorzusehen, so dass diese aktualisiert und an neue, angeschlossenen Geräte angepasst werden kann.

In der Figur 3 ist ein weiteres Ausführungsbeispiel in einer vereinfachten Ausführung dargestellt, bei dem an eine Steuereinheit eine Anzeigeeinrichtung 61 für die Darstellung von Fahrzeugdaten, z.B. mittels einer Skalenanzeige 62 und 7 oder mit einer Flüssigkristallanzeige, und eine Luftschnittstelle 63 zur Verbindung mit einem Eingabegerät 64 oder zu einem Datennetz 65 angeordnet ist. Vorzugsweise ist für eine Positionsbestimmung auch ein GPS-Empfänger 72 zum Herstellen eines Funkkontakts zu einem Satelliten 66 eines Satellitenordnungssystems mit der Steuervorrichtung 60 verbunden. Die Steuervorrichtung 60 kann über Datenbusse 67 auf Fahrzeugfunktionen und auf Sensoren 68 zugreifen. Eine Bedienung erfolgt über vorzugsweise an dem Fahrzeuglenker angeordnete Bedienelemente 69. Eine Sprachsteuerung erfolgt über ein Mikrofon 70 und einer Ausgabe von Radioinformationen, von Fahrhinweisen oder von Warnmeldungen über einen Lautsprecher 71. Alle für die Steuerung wesentlichen Einheiten und eine Überwachung des Zugangs über die Luftschnittstelle sind in der Steuervorrichtung 60 vorgesehen. Die Steuervorrichtung 60 ist dabei vorzugsweise in einem Gehäuse des Anzeigeinstruments 61 integriert, so dass auf die Anordnung von weiteren Gehäuseteile für die Steuervorrichtung 60 im Fahrzeug verzichtet werden kann. Dabei ist auch die Luftschnittstelle 63 mit in die vorzugsweise als ein Kombiinstrument zur Darstellung einer Vielzahl von Anzeigen im Fahrzeug ausgebildeten Anzeigeeinrichtung 61 angeordnet. Möglich ist auch, das Mikrofon 70 und den Lautsprecher 71 mit in die Anzeigeeinrichtung 61 zu integrieren. Ferner ist auch eine Ausgabe über Lautsprecher eines Autoradios möglich, dass zusätzlich im Fahrzeug vorzusehen ist. Eine Identifikation eines Benutzers erfolgt vorzugsweise über ein Kartenlesegerät, in das eine Speicherkarte eingeschoben wird. Es erfolgt vorzugsweise eine Sprachsteuerung, wobei auch Texte z.B. zum Erstellen von E-Mails, eingesprochen werden können. In einem bevorzugten Ausführungsbeispiel sind auch eine Telefonfunktion und eine Kurznachrichtenübermittlung in die Steuervorrichtung 60 integriert.

## Patentansprüche

1. Steuervorrichtung in einem Fahrzeug, wobei durch die Steuervorrichtung Fahrzeugfunktionseinrichtungen und/oder Ausgabegeräte im Fahrzeug steuerbar sind, wobei die Steuervorrichtung (2, 41, 42, 60) mit einer Luftschnittstelle (25, 25', 51, 63) und mit einer Vielzahl von Fahrzeugbussystemen (8, 9, 20, 43, 67) verbunden ist, wobei Daten zwischen den Fahrzeugbussystemen über die Steuervorrichtung austauschbar sind, wobei die Steuervorrichtung (2, 41, 42, 60) über die Luftschnittstelle (25, 25', 51, 63) mit einer Eingabevorrichtung (27, 49, 64) verbindbar ist, wobei die Fahrzeugfunktionseinrichtungen (3, 10, 11, 24, 43, 61, 67) und/oder die Ausgabegeräte (17, 18, 53) im Fahrzeug über die Eingabevorrichtung (27, 49, 64) steuerbar sind und wobei mit der Steuervorrichtung in Abhängigkeit von einer von der Eingabevorrichtung (27, 49, 64) übermittelten Identifikation in der Steuervorrichtung (2, 41, 42, 58, 60) eine Überprüfung durchführbar ist, auf welche Bussysteme (8, 9, 20, 43, 67) die Eingabevorrichtung (27, 49, 64) zugreifen darf.

2. Steuervorrichtung nach Anspruch 1, **dadurch gekennzeichnet, dass** mit der Steuervorrichtung in Abhängigkeit von einer von der Eingabevorrichtung (27, 49, 64) übermittelten Identifikation in der Steuervorrichtung (2, 41, 42, 58, 60) eine Überprüfung durchführbar ist, auf welche über ein Bussystem steuerbare Funktionen die Eingabevorrichtung zugreifen darf.

3. Steuervorrichtung nach einem der vorherigen Ansprüche, **dadurch gekennzeichnet, dass** in der Steuervorrichtung (2) ein nichtflüchtiger Speicher (30) angeordnet ist und dass in dem nichtflüchtigen Speicher (30) abgelegt ist, unter welchen Bedingungen auf welches Bussystem (8, 9, 20) und/oder auf welche über ein Bussystem aufrufbare Funktion zugegriffen werden kann.

4. Steuervorrichtung nach einem der vorhergehenden Ansprüche, **dadurch gekennzeichnet, dass** die Luftschnittstelle (63) an einer Anzeigeeinrichtung (60, 61) angeordnet ist.

5. Steuervorrichtung nach einem der vorhergehenden Ansprüche, **dadurch gekennzeichnet, dass** zwischen der Luftschnittstelle (51) und einer ersten Steuervorrichtung (41) eine erste Firewall (52) und zwischen der ersten Steuervorrichtung (41) und einer zweiten Steuervorrichtung (42) eine zweite Firewall (48) geschaltet ist und dass mit der ersten Steuervorrichtung (41) Ausgabegeräte (17, 18) und mit der zweiten Steuervorrichtung (42) Fahrzeugfunktionseinrichtungen (43, 44) verbunden sind.

6. Steuervorrichtung nach Anspruch 5, **dadurch gekennzeichnet, dass** an die erste Steuervorrichtung (41) eine erste Anzeigeeinrichtung (53) und an die zweite Steuervorrichtung (42) eine zweite Anzeigeeinrichtung (44) angeschlossen ist, wobei in der zweiten Anzeigeeinrichtung (44) Fahrzeugdaten und in der ersten Anzeigeeinrichtung (53) Daten der Ausgabegeräte (17, 18) anzeigbar sind.

7. Steuervorrichtung nach einem der vorhergehenden Ansprüche, **dadurch gekennzeichnet, dass** in einem Einbaubereich (16) Ausgabegeräte (17, 18, 19) anbringbar und an die Steuervorrichtung (41) anschließbar sind.

8. Steuervorrichtung nach Anspruch 7, **dadurch gekennzeichnet, dass** in dem Fahrzeug eine Anschlussvorrichtung (56) zum Anbringen von Steckkarten (58, 59) angeordnet ist und dass die Steckkarten (58, 59) mit der Steuervorrichtung (41, 42) verbindbar sind.

9. Steuervorrichtung nach einem der vorhergehenden Ansprüche, **dadurch gekennzeichnet, dass** die Steuervorrichtung (2, 41, 42, 60) über in einem Lenkrad des Fahrzeugs angeordnete Bedienelemente (12, 47, 69) bedienbar ist.

10. Steuervorrichtung nach einem der vorhergehenden Ansprüche, **dadurch gekennzeichnet, dass** über die Luftschnittstelle (25, 25', 51, 63) Fahrzeugdaten abrufbar sind.

11. Steuervorrichtung nach Anspruch 10, **dadurch gekennzeichnet, dass** eine Ansteuerung der Luftschnittstelle (51) auf einer Steckkarte (55) in einem Steckkartengehäuse (56) angeordnet ist.

12. Steuervorrichtung nach einem der vorhergehenden Ansprüche, **dadurch gekennzeichnet, dass** die Eingabevorrichtung (27, 49, 64) weitere Funktionen aufweist und dass die weiteren Funktionen über eine an die Steuervorrichtung angeschlossene Bedieneinheit (12, 15, 47, 54, 69) steuerbar sind.

## Claims

1. Control device in a vehicle, wherein vehicle function devices and/or output devices in the vehicle can be controlled by means of the control device, wherein the control device (2, 41, 42, 60) is connected to an air interface (25, 25', 51, 63) and to a plurality of vehicle bus systems (8, 9, 20, 43, 67), wherein data can be exchanged between the vehicle bus systems via the control device, wherein the control device (2, 41, 42, 60) can be connected to an input device (27, 49, 64) via the air interface (25, 25', 51, 63), wherein the vehicle function devices (3, 10, 11, 24, 43, 61, 67) and/or the output devices (17, 18, 53) in the vehicle can be controlled via the input device (27, 49, 64), and wherein checking to determine which bus systems (8, 9, 20, 43, 67) may be accessed by the input device (27, 49, 64) can be carried out by means of the control device as a function of an identifier in the control device (2, 41, 42, 58, 60), which identifier is transferred by the input device (27, 49, 64).

2. Control device according to Claim 1, **characterized in that** checking to determine which functions which can be controlled via a bus system may be accessed by the input device can be carried out by means of the control device as a function of an identifier in the control device (2, 41, 42, 58, 60), which identifier is transferred by the input device (27, 49, 64).

3. Control device according to one of the preceding claims, **characterized in that** a non-volatile memory (30) is arranged in the control device (2), and **in that** data indicating under which conditions it is possible to access which bus system (8, 9, 20) and/or which function can be accessed via a bus system is stored in the non-volatile memory (30).

4. Control device according to one of the preceding claims, **characterized in that** the air interface (63) is arranged on a display device (60, 61).

5. Control device according to one of the preceding claims, **characterized in that** a first fire wall (52) is connected between the air interface (51) and a first control device (41), a second fire wall (48) is connected between the first control device (41) and a second control device (42), and **in that** output devices (17, 18) are connected to the first control device (41), and vehicle function devices (43, 44) are connected to the second control device (42).

6. Control device according to Claim 5, **characterized in that** a first display device (53) is connected to the first control device (41), and a second display device (44) is connected to the second control device (42), wherein vehicle data can be displayed in the second display device (44), and data of the output devices (17, 18) can be displayed in the first display device (53).

7. Control device according to one of the preceding claims, **characterized in that** output devices (17, 18, 19) can be mounted in an installation region (16) and connected to the control device (41).

8. Control device according to Claim 7, **characterized in that** a connecting device (56) for mounting plug-in cards (58, 59) is arranged in the vehicle, and **in that** the plug-in cards (58, 59) can be connected to the control device (41, 42).

9. Control device according to one of the preceding claims, **characterized in that** the control device (2, 41, 42, 60) can be operated by means of operator control elements (12, 47, 69) which are arranged in a steering wheel of the vehicle.

10. Control device according to one of the preceding claims, **characterized in that** vehicle data can be called via the air interface (25, 25', 51, 63).

11. Control device according to Claim 10, **characterized in that** a means of actuating the air interface (51) is arranged on a plug-in card (55) in a plug-in card housing (56).

12. Control device according to one of the preceding claims, **characterized in that** the input device (27, 49, 64) has further functions, and **in that** the further functions can be controlled via an operator control unit (12, 15, 47, 54, 69) which is connected to the control device.

## Revendications

1. Dispositif de commande dans un véhicule automobile, pour commander des dispositifs fonctionnels du véhicule automobile et/ou des appareils transmetteurs de données, le dispositif de commande (2, 41, 42, 60) étant relié à une interface radio (25, 25', 51, 63) et à une pluralité de système de bus du véhicule automobile (8, 9, 20, 43, 67), des données pouvant être échangées par l'intermédiaire du dispositif de commande entre les systèmes de bus du véhicule automobile,
dans lequel
le dispositif de commande (2, 41, 42, 60) est relié à un organe d'entrée (27, 49, 64) par l'intermédiaire de l'interface radio (25, 25', 51, 63), les dispositifs fonctionnels du véhicule automobile (3, 10, 11, 24, 43, 61, 67) et/ou les appareils de données (17, 18, 53) se trouvant dans le véhicule sont commandés par l'intermédiaire de l'organe d'entrée (27, 49, 64), et par l'intermédiaire du dispositif de commande, indépendamment d'une identification contenue dans le dispositif de commande (2, 41, 42, 58, 60) transmise depuis l'organe d'entrée (27, 49, 64), il est possible de contrôler à quels systèmes de bus (8, 9, 20, 43, 67) l'organe d'entrée (27, 49, 64) doit accéder.

2. Dispositif de commande selon la revendication 1,
**caractérisé en ce que**
par l'intermédiaire du dispositif de commande, indépendamment d'une identification contenue dans le dispositif de commande (2, 41, 42, 58, 60) transmise depuis l'organe d'entrée (27, 49, 64), il est possible de contrôler à quels systèmes de bus l'organe d'entrée doit accéder.

3. Dispositif de commande selon l'une quelconque des revendications précédentes,
**caractérisé en ce qu'**
une mémoire non-volatile (30) est disposée dans le dispositif de commande (2) et, dans la mémoire non-volatile (30), sont stockées les conditions permettant d'accéder à un système de bus donné (8, 9, 20) et/ou à une fonction donnée pouvant être appelée par un système de bus.

4. Dispositif de commande selon l'une quelconque des revendications précédentes,
**caractérisé en ce que**
l'interface radio (63) est disposée sur un dispositif d'affichage (60, 61).

5. Dispositif de commande selon l'une quelconque des revendications précédentes,
**caractérisé en ce qu'**
un premier coupe-feu (52) est connecté entre l'interface radio (51) et un premier dispositif de commande (41), et un second coupe-feu (48) est branché entre le premier dispositif de commande (41) et un second dispositif de commande (42), et les appareils de données (17, 18) sont reliés au premier dispositif de commande (41) alors que les dispositifs fonctionnels du véhicule automobile (43, 44) sont reliés au second dispositif de commande (42).

6. Dispositif de commande selon la revendication 5,
**caractérisé en ce qu'**
un dispositif d'affichage (53) est raccordé au premier dispositif de commande (41) et un second dispositif d'affichage (44) au second dispositif de commande (42), les données du véhicule automobile pouvant être affichées sur le second dispositif d'affichage (44) et les données des appareils (17, 18) sur le premier dispositif d'affichage (53).

7. Dispositif de commande selon l'une quelconque des revendications précédentes,
**caractérisé en ce que**
des appareils de données (17, 18, 19) peuvent être placés dans une zone d'insertion (16) et peuvent être raccordés au dispositif de commande (41).

8. Dispositif de commande selon la revendication 7,
**caractérisé en ce qu'**
un dispositif de raccordement (56) destiné à l'installation de cartes enfichables (58, 59) est disposé dans le véhicule automobile, et les cartes enfichables (58, 59) peuvent être reliées au dispositif de commande (41, 42).

9. Dispositif de commande selon l'une quelconque des revendications précédentes,
**caractérisé en ce que**
le dispositif de commande (2, 41, 42, 60) peut être commandé par l'intermédiaire d'organes de commande (12, 47, 69) se trouvant dans le volant du véhicule automobile.

10. Dispositif de commande selon l'une quelconque des revendications précédentes,
**caractérisé en ce qu'**
il est possible de rechercher des données concernant le véhicule automobile par l'intermédiaire de l'interface radio (25, 25', 51, 63).

11. Dispositif de commande selon la revendication 10,
**caractérisé en ce que**
le dispositif d'activation de l'interface radio (51) est disposé sur une carte enfichable (55) se trouvant dans un logement de cartes enfichables (56).

12. Dispositif de commande selon l'une quelconque des revendications précédentes,
**caractérisé en ce que**
l'organe d'entrée (27, 49, 64) comporte d'autres fonctions, et les autres fonctions peuvent être commandées par l'intermédiaire d'une unité de commande (12, 15, 47, 54, 69) raccordée au dispositif de commande.
